Europäisches Patentamt

European Patent Office

Office européen des brevets

(11) Numéro de publication : **0 037 562**
**B1**

# (12) FASCICULE DE BREVET EUROPÉEN

(45) Date de publication du fascicule du brevet :
13.06.84

(21) Numéro de dépôt : **81102483.5**

(22) Date de dépôt : **02.04.81**

(51) Int. Cl.³ : **A 47 J 37/12**

(54) **Friteuse ménagère.**

(30) Priorité : **04.04.80 FR 8007684**

(43) Date de publication de la demande :
**14.10.81 Bulletin 81/41**

(45) Mention de la délivrance du brevet :
**13.06.84 Bulletin 84/24**

(84) Etats contractants désignés :
**AT BE CH DE GB IT LI NL SE**

(56) Documents cités :
**DE-A- 2 931 859**
**DE-C-  175 869**
**DE-C-  621 405**
**DE-U- 7 507 871**
**FR-A- 1 315 125**
**FR-A- 1 327 156**
**US-A- 2 032 175**
**US-A- 2 071 467**

(73) Titulaire : **MOULINEX S.A.**
**7 à 15, rue Jules-Ferry**
**F-93170 Bagnolet (FR)**

(72) Inventeur : **Bouillet, André**
**6, rue des Fossettes**
**Cormelles-le-Royal F-14123 Ifs (FR)**

(74) Mandataire : **May, Hans Ulrich**
**Thierschstrasse 27**
**D-8000 München 22 (DE)**

EP 0 037 562 B1

Jouve, 18, rue St-Denis, 75001 Paris, France

## Description

L'invention se rapporte aux friteuses ménagères comprenant une bassine de réception d'un bain de cuisson ainsi qu'un panier muni d'une poignée et susceptible d'occuper, soit une position de cuisson pour laquelle ce panier est plongé dans le bain, soit une position d'égouttage pour laquelle ce panier est maintenu au-dessus du bain par un dispositif d'accrochage monté sur la poignée et prenant appui sur la bassine, la poignée comportant une branche descendante externe à la bassine, et le dispositif d'accrochage comprenant un doigt monté mobile sur ladite branche descendante et susceptible d'occuper ainsi, sous la commande d'une touche montée mobile sur la poignée, soit une position d'extension pour laquelle le doigt, faisant saillie vers la bassine, peut prendre appui sur le bord supérieur de cette bassine pour maintenir le panier en position d'égouttage, soit une position de retrait pour laquelle, le doigt étant écarté de la bassine, la descente du panier vers la position de cuisson est autorisée.

Une friteuse de ce genre est décrite, par exemple, dans le brevet allemand 175 869.

L'invention a pour objet une simplification de construction, visant à une diminution du prix de revient et en même temps à une plus grande commodité d'utilisation de la friteuse.

Dans une friteuse selon l'invention, la bassine comprend une cuve ainsi qu'un filtre à déchets amovible s'emboîtant dans cette cuve et présentant un rebord supérieur adapté à recouvrir le bord supérieur de la cuve ; ce rebord du filtre et le doigt mobile d'accrochage de la poignée comportent des moyens d'engagement mutuels aptes à permettre le relèvement du filtre au moyen de la poignée du panier.

Cette disposition présente, en particulier, l'avantage d'éviter à l'usager la manipulation de plusieurs poignées au cours de l'utilisation de l'appareil.

Une friteuse ménagère dans laquelle la bassine comprend, outre la cuve usuelle, un filtre à déchets amovible s'emboîtant dans cette cuve est décrite dans le brevet américain 2 071 467.

Les caractéristiques et avantages de l'invention ressortiront d'ailleurs de la description qui va suivre, à titre d'exemple, en référence aux dessins annexés dans lesquels :

la figure 1 est une coupe verticale partielle d'une friteuse réalisée selon l'invention, avec le doigt d'accrochage en position de retrait et le panier en position de cuisson ;

la figure 2 est une vue analogue, mais avec le doigt en position d'extension et le panier en position d'égouttage ;

la figure 3 est encore une vue analogue avec le doigt placé en position d'extension et utilisé alors pour relever un filtre à déchets équipant la friteuse ;

la figure 4 est une coupe partielle de la poignée du panier, montrant une tirette d'attelage entre la touche mobile et le doigt d'accrochage ;

la figure 5 est une vue de dessus partielle du filtre à déchets ;

la figure 6 est une coupe transversale d'une fente de ce filtre à déchets.

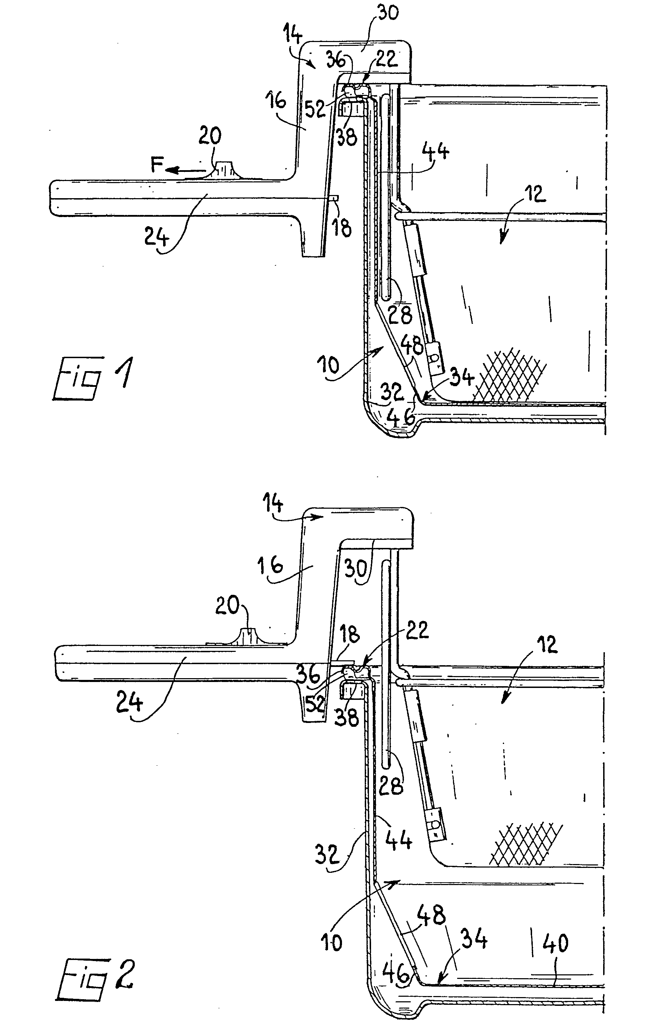

La friteuse représentée comprend une bassine 10 de réception d'un bain de cuisson, ainsi qu'un panier 12 muni d'une poignée 14 et susceptible d'occuper, soit une position de cuisson (fig. 1) pour laquelle ce panier 12 est plongé dans le bain, soit une position d'égouttage (fig. 2) pour laquelle ce panier 12 est maintenu au-dessus du bain par un dispositif d'accrochage monté sur la poignée 14 et prenant appui sur la bassine 10.

La poignée 14 comporte une branche descendante 16 externe à la bassine 10, et le dispositif d'accrochage comprend un doigt 18 monté mobile sur cette branche 16 et susceptible d'occuper ainsi, sous la commande d'une touche 20 montée mobile sur la poignée, soit une position d'extension (fig. 2) pour laquelle le doigt 18, faisant saillie vers la bassine 10, peut prendre appui sur le bord supérieur 22 de cette bassine pour maintenir le panier en position d'égouttage, soit une position de retrait (fig. 1) pour laquelle, le doigt 18 étant écarté de la bassine 10, la descente du panier vers la position de cuisson est autorisée.

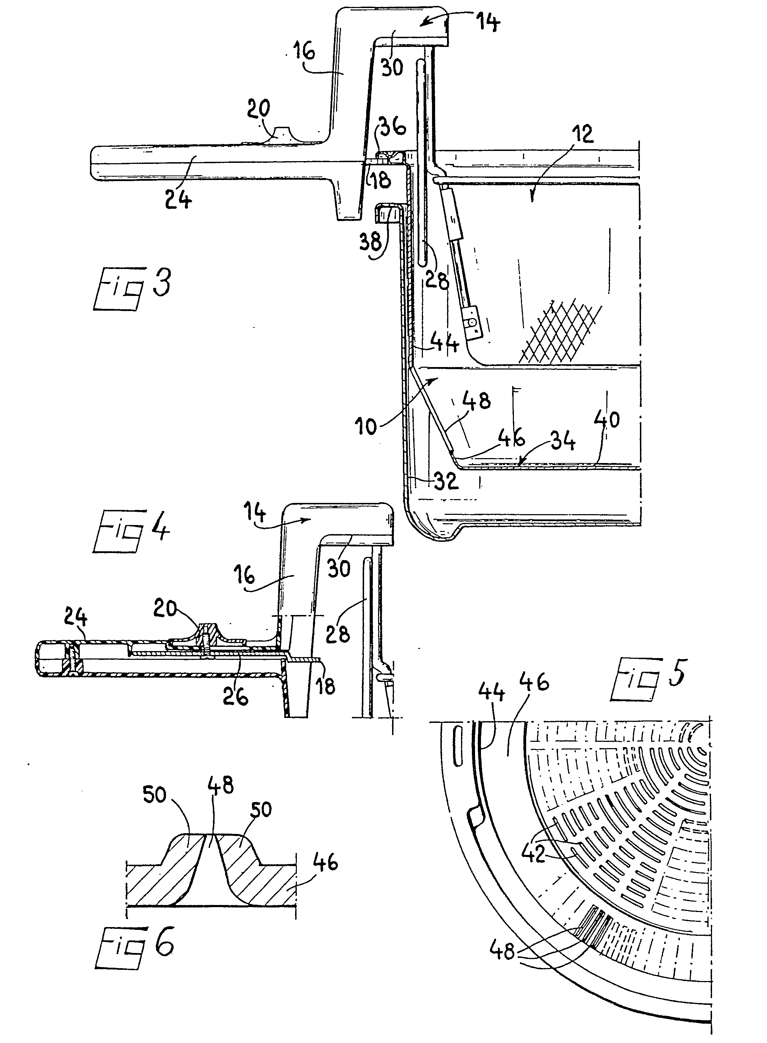

Le doigt 18 est monté coulissant horizontalement, tandis que la touche 20 est également montée coulissante horizontalement sur la face supérieure d'un manche horizontal 24 solidaire de la partie inférieure de la branche descendante 16 de la poignée. Comme on le voit sur la figure 4, la touche 20 est attelée au doigt 18 par une tirette 26 interne au manche 24.

La poignée 14 comporte en outre un guide vertical descendant 28 interne à la bassine 10 et formant ainsi, avec la partie supérieure 30 de la poignée et avec la branche descendante 16, un arceau en forme générale de U renversé qui vient chevaucher le bord 22 de la bassine 10 et dans lequel fait saillie le doigt mobile 18.

La bassine 10 comprend une cuve cylindrique 32 et un filtre à déchets amovible 34 s'emboîtant dans la cuve 32 et présentant un rebord supérieur 36 adapté à recouvrir le bord supérieur 38 de cette cuve. Ce filtre 34 comprend un fond horizontal 40 présentant de fines perforations 42 (fig. 5), une paroi latérale cylindrique non perforée 44 se prolongeant jusqu'au rebord supérieur 36, et une partie conique 46 reliant la paroi cylindrique 44 au fond perforé 40 et présentant une série de fines fentes 48 pratiquées respectivement dans des plans verticaux. Comme on le voit sur la figure 6, les bords longitudinaux 50 de ces fentes sont recourbés vers l'intérieur du filtre.

La présente invention prévoit que le filtre 34 ainsi constitué peut être relevé au moyen de la poignée 14 du panier, et qu'à cet effet le doigt d'accrochage 18 et le rebord supérieur 36 du filtre comportent des moyens d'engagement mutuels.

Ces moyens d'engagement peuvent simplement comprendre un espace 52 qui est laissé entre le bord 38 de la cuve et le rebord 36 du filtre lorsque ce filtre est en place dans la cuve (fig. 1 et 2), et qui est adapté à recevoir le doigt d'accrochage 18 lorsque celui-ci est en sa position d'extension.

Pour placer le panier en position de cuisson (fig. 1) l'usager, saisissant ce panier par le manche 24, tire vers lui la touche 20 selon la flèche F, ce qui provoque le retrait du doigt 18 et autorise la descente du panier dans le bain de friture.

A la fin de la cuisson, l'usager remonte d'abord le panier tout en conservant la touche tirée vers lui puis, lorsque le doigt 18 a atteint le niveau du bord 22 de la bassine, repousse la touche 20 en sens inverse de la flèche F pour amener le doigt 18 en position d'extension. Ce doigt vient alors reposer sur le bord 22 de la bassine, c'est-à-dire sur le rebord 36 du filtre (fig. 2), maintenant le panier en position d'égouttage.

Lorsqu'il s'agit de retirer du bain d'huile de friture les déchets d'aliments qui ont pu s'y répandre au cours de la cuisson, on procède de la façon suivante : après avoir d'abord tiré la touche 20 selon la flèche F pour obtenir le retrait du doigt 18, on déplace en hauteur le panier jusqu'à amener ce doigt au niveau de l'espace 52 entre le bord 38 et le rebord 36. On repousse alors la touche pour obtenir l'engagement du doigt 18 dans cet espace 52, puis on soulève lentement la poignée (fig. 3), ce qui a pour effet d'extraire le filtre 34 hors de la cuve 32. Au cours de ce mouvement, l'huile s'écoule hors de ce filtre dans la cuve 32 à travers les perforations 42 et les fentes latérales 48 tandis que les déchets sont, en majeure partie, retenus à l'intérieur du filtre 34. On notera que la forme recourbée des bords 50 des fentes 48 tend à retenir les déchets dans le filtre, tout en autorisant une bonne évacuation de l'huile.

**Revendications**

1. Friteuse ménagère comprenant une bassine (10) de réception d'un bain de cuisson ainsi qu'un panier (12) muni d'une poignée (14) et susceptible d'occuper, soit une position de cuisson pour laquelle ce panier (12) est plongé dans le bain, soit une position d'égouttage pour laquelle ce panier (12) est maintenu au-dessus du bain par un dispositif d'accrochage monté sur la poignée (14) et prenant appui sur la bassine (10), la poignée (14) comportant une branche descendante (16) externe à la bassine (10), et le dispositif d'accrochage comprenant un doigt (18) monté mobile sur ladite branche descendante et susceptible d'occuper ainsi, sous la commande d'une touche (20) montée mobile sur la poignée (14), soit une position d'extension pour laquelle le doigt (18), faisant saillie vers la bassine (10), peut prendre appui sur le bord supérieur (22) de cette bassine pour maintenir le panier (12) en position d'égouttage, soit une position de retrait pour laquelle, le doigt (18) étant écarté de la bassine, la descente du panier (12) vers la position de cuisson est autorisée, caractérisée en ce que la bassine (10) comprend une cuve (32) ainsi qu'un filtre à déchets amovible (34) s'emboîtant dans cette cuve (32) et présentant un rebord supérieur (36) adapté à recouvrir le bord supérieur (38) de la cuve (32), et en ce que ledit rebord (36) du filtre et le doigt mobile d'accrochage (18) de la poignée (14) comportent des moyens d'engagement mutuels aptes à permettre le relèvement dudit filtre (34) au moyen de la poignée (14) du panier (12).

2. Friteuse selon la revendication 1, caractérisée en ce que les moyens d'engagement comprennent un espace (52) laissé entre le bord supérieur (38) de la cuve (32) et le rebord (36) du filtre (34) et adapté à recevoir le doigt d'accrochage (18).

3. Friteuse selon la revendication 1 ou la revendication 2, caractérisée en ce que le filtre (34) comprend un fond horizontal perforé (40), une paroi latérale cylindrique non perforée (44) se prolongeant jusqu'au rebord supérieur (36) et une partie conique (46) reliant ladite paroi cylindrique (44) audit fond (40) et présentant une série de fentes (48) pratiquées respectivement dans des plans verticaux.

4. Friteuse selon la revendication 3, caractérisée en ce que les bords longitudinaux (50) des fentes (48) de la partie conique sont recourbés vers l'intérieur du filtre (34).

**Claims**

1. Domestic deep frying device comprising a container (10) for accommodating a deep frying bath and a basket (12) provided with a handle (14) and adapted to take either a deep frying position in which said basket (12) is immersed into the bath or a dripping position in which said basket (12) is retained above the bath by means of a holding means held at the handle (14) and supported by the container (10), wherein the handle (14) includes an arm (16) depending outside of the container (10) and the holding means includes a finger (18) movably held on said depending arm, said finger under control of an actuating button (20) movably mounted on the handle being adapted to take either an extended operative position in which the finger (18) projects towards the container (10) and may be supported by the upper rim (22) of this container so as to maintain the basket (12) in the dripping position, or a retracted inoperative position in which the finger (18) is remote from the container and the basket (12) may be lowered into the deep frying position, characterized in that the container (10) includes a pan (32) and a removable waste filter (34) adapted to be inserted into said pan (32) and including an upper peripheral rim (36) which may cover the upper rim (38) of the pan (32), and that the peripheral rim (36) of the filter and the movable retaining finger (18) of the handle (14) are provided with means for mutual engagement to permit lifting of the filter (34) by means of the handle of the basket (12).

2. Deep frying device as claimed in claim 1, characterized in that the means for mutual engagement include a spacing left between the upper rim (38) of the pan and the peripheral rim (36) of the filter (34) and intended to receive the retaining finger (18).

3. Deep frying device as claimed in claim 1 or claim 2, characterized in that the filter (34) includes a horizontal perforated bottom (40), an unperforated cylindrical side wall (44) extending to the upper peripheral rim (36) and having a conical portion (46) joining the cylindrical wall (44) to the bottom (40) and being formed with a number of slits (48) each formed in vertical planes.

4. Deep frying device as claimed in claim 3, characterized in that the longitudinal edges (50) of the slits (48) of the conical portion are bent back towards the interior of the filter (34).

**Ansprüche**

1. Haushalts-Fritiergerät mit einem Gefäß (10) zur Aufnahme eines Fritierbades sowie mit einem Korb (12), der mit einem Griff (14) versehen ist und entweder eine Fritierstellung, in welcher dieser Korb (12) in das Bad eingetaucht ist, oder eine Abtropfstellung einnehmen kann, in der dieser Korb (12) oberhalb des Bades durch eine am Griff (14) gehaltene und sich am Gefäß (10) abstützende Haltevorrichtung gehalten ist, wobei der Griff (14) einen außerhalb des Gefäßes (10) herabreichenden Arm (16) aufweist und die Haltevorrichtung einen an diesem herabreichenden Arm beweglich gehaltenen Finger (18) aufweist, der so, gesteuert von einer am Griff beweglich gehaltenen Betätigungstaste (20) entweder eine herausgeschobene Arbeitsstellung einnehmen kann, in welcher der Finger (18) in Richtung auf das Gefäß (10) vorspringt und sich am oberen Rand (22) dieses Gefäßes abstützen kann, um den Korb (12) in der Abtropfstellung zu halten, oder eine zurückgezogene Ruhestellung einnehmen kann, in welcher der Finger (18) vom Gefäß entfernt ist und der Korb (12) in die Fritierstellung abgesenkt werden kann, dadurch gekennzeichnet, daß das Gefäß (10) einen Topf (32) sowie ein herausnehmbares Abfallfilter (34) aufweist, das in diesen Topf (32) einsetzbar ist und eine obere Randleiste (36), die den oberen Rand (38) des Topfes (32) überdecken kann, aufweist, und daß die Randleiste (36) des Filters und der bewegliche Haltefinger (18) des Griffes (14) zum gegenseitigen Eingriff bestimmte Vorrichtungen aufweisen, welche das Anheben des Filters (34) mittels des Griffes (14) des Korbes (12) ermöglichen.

2. Fritiergerät nach Anspruch 1, dadurch gekennzeichnet, daß die zum Eingriff miteinander bestimmten Vorrichtungen einen Zwischenraum (52) aufweisen, der zwischen dem oberen Rand (38) des Topfes und der Randleiste (36) des Filters (34) gelassen und zur Aufnahme des Haltefingers (18) vorgesehen ist.

3. Fritiergerät nach Anspruch 1 oder Anspruch 2, dadurch gekennzeichnet, daß das Filter (34) einen waagerechten gelochten Boden (40), eine ungelochte zylindrische Seitenwand (44), die sich bis zur oberen Randleiste (36) erstreckt und einen konischen Teil (46) aufweist, der die zylindrische Wand (44) mit dem Boden (40) verbindet und eine Reihe von jeweils in senkrechten Ebenen ausgebildeten Schlitzen (48) aufweist.

4. Fritiergerät nach Anspruch 3, dadurch gekennzeichnet, daß die Längsränder (50) der Schlitze (48) des konischen Teils zum Inneren des Filters (34) hin zurückgebogen sind.

Fig 1

Fig 2

0 037 562

Fig 3

Fig 4

Fig 5

Fig 6